# EUROPÄISCHE PATENTANMELDUNG

(11) **EP 4 131 732 A1**
(43) Veröffentlichungstag der Anmeldung: **08.02.2023**
(21) Anmeldenummer: 22186749.2
(22) Anmeldetag: 25.07.2022
(51) Int. Cl.: H02K 1/276, H02K 15/03

(54) **ROTOR FÜR EINE ELEKTRISCHE MASCHINE MIT EINER AUFGEWEITETEN EINFÜLL- ODER ENTLÜFTUNGSÖFFNUNG**

(30) Priorität: 26.07.2021 DE 102021208024
(71) Anmelder: Valeo Siemens eAutomotive Germany GmbH, 91056 Erlangen (DE)
(72) Erfinder: Wieczorek, Christoph, c/o Bad Neustadt a.d. Saale (DE); Dieterich, Sebastian, c/o Bad Neustadt a.d. Saale (DE); Rubi, Markus, c/o Bad Neustadt a.d. Saale (DE); Schlereth, Alexander, c/o Bad Neustadt a.d. Saale (DE); Lemmert, Kay, c/o Bad Neustadt a.d. Saale (DE); Hellmuth, Stephan, c/o Bad Neustadt a.d. Saale (DE); Werner, Robert, c/o Bad Neustadt a.d. Saale (DE); Büsch, Robin, c/o Bad Neustadt a.d. Saale (DE)
(74) Vertreter: Valeo Powertrain Systems

(57) **Zusammenfassung**

Rotor (1) für eine elektrische Maschine (25), umfassend ein aus gestapelten Elektroblechen gebildetes Blechpaket (2) mit darin angeordneten Magnettaschen (3, 5), mehrere Magnete (6, 7), von denen in jede der Magnettaschen (3, 5) mindestens einer eingesetzt ist, mehrere Freiräume (8, 9), die jeweils von den in eine der Magnettaschen (3, 5) eingesetzten Magneten (6, 7) und dem Blechpaket (2) begrenzt sind, eine an einer Axialseite des Blechpakets (2) angeordnete Einfüllöffnung (13, 14, 16), durch die ein erster der Freiräume (8) freigelegt ist, und eine an der Axialseite angeordnete Entlüftungsöffnung (17), durch die ein zweiter der Freiräume (9) freigelegt ist, wobei das äußere Ende der Einfüllöffnung (13, 14, 16) und/oder das äußere Ende der Entlüftungsöffnung (17) aufgeweitet sind. Daneben werden eine elektrische Maschine (25) mit dem Rotor (1), ein Fahrzeug (24) mit der Maschine (25) und ein Verfahren zur Herstellung des Rotors (1) beschrieben.

## Beschreibung

Die Erfindung betrifft einen Rotor für eine elektrische Maschine mit einem aus gestapelten Elektroblechen gebildeten Blechpaket, darin angeordneten Magnettaschen und mehreren Magneten (Permanentmagneten), von denen in jede der Magnettaschen mindestens einer eingesetzt ist.

Elektrische Maschinen mit so einem Rotor werden in zunehmendem Maße in elektrisch angetriebenen Fahrzeugen und Hybridfahrzeugen eingesetzt, überwiegend als Elektromotoren für den Antrieb eines Rads oder einer Achse eines derartigen Fahrzeugs.

Ein solcher Elektromotor ist zumeist mechanisch mit einem Getriebe zur Drehzahlanpassung gekoppelt. Daneben ist der Elektromotor in der Regel elektrisch mit einem Wechselrichter gekoppelt, der aus einer von einer Batterie gelieferten Gleichspannung eine Wechselspannung für den Betrieb des Elektromotors erzeugt, beispielsweise eine mehrphasige Wechselspannung.

Es ist auch möglich, eine elektrische Maschine mit einem derartigen Rotor als Generator zur Rekuperation von Bewegungsenergie eines Fahrzeugs zu betreiben. Hierzu wird die Bewegungsenergie zunächst in elektrische Energie und dann in chemische Energie einer Fahrzeugbatterie umgewandelt.

Es muss sichergestellt werden, dass die in den Magnettaschen angeordneten Magnete ihre Position beibehalten, insbesondere bei hohen Drehzahlen. Hierfür ist es üblich, die Magnete mit einer Vergussmasse zu vergießen. Dazu wird die Düse einer Dosiereinrichtung in eine Einfüllöffnung des Blechpakets eingeführt, wonach die Vergussmasse durch die Düse und die Einfüllöffnung in das Blechpaket strömt. Dabei kann die Vergussmasse in dem Blechpaket befindliche Luft verdrängen, welche durch eine Entlüftungsöffnung aus dem Blechpaket herausströmt. Nach dem Aushärten der Vergussmasse sind die Magnete sicher in dem Blechpaket befestigt.

Allerdings kann es dazu kommen, dass bei dem Befüllvorgang Vergussmasse aus der Einfüllöffnung oder der Entlüftungsöffnung austritt und sich auf dem Blechpaket ansammelt. Dieser unerwünschte Effekt tritt insbesondere dann auf, wenn die Vergussmasse unter Druck in das Blechpaket eingebracht wird, die Düse die Einfüllöffnung nicht ausreichend abdichtet oder die Vergussmasse nicht exakt dosiert wird. Die Vergussmasse auf dem Blechpaket kann zu Schäden beim Betrieb der elektrischen Maschine führen, weshalb diese Vergussmasse aufwendig beseitigt werden muss.

Der Erfindung liegt daher die Aufgabe zugrunde, einen Rotor für eine elektrische Maschine anzugeben, bei dem vermieden wird, dass sich zum Fixieren von Magneten in einem Blechpaket des Rotors verwendete Vergussmasse auf dem Blechpaket ansammelt.

Zur Lösung der Aufgabe ist bei einem Rotor der eingangs genannten Art erfindungsgemäß vorgesehen, dass er Folgendes aufweist: mehrere Freiräume, die jeweils von den in eine der Magnettaschen eingesetzten Magneten und dem Blechpaket begrenzt sind, eine an einer Axialseite des Blechpakets angeordnete Einfüllöffnung, durch die ein erster der Freiräume freigelegt ist, und eine an der Axialseite angeordnete Entlüftungsöffnung, durch die ein zweiter der Freiräume freigelegt ist. Eine Besonderheit des Rotors besteht darin, dass das äußere Ende der Einfüllöffnung aufgeweitet ist, das äußere Ende der Entlüftungsöffnung aufgeweitet ist oder beide Enden aufgeweitet sind.

Durch die Aufweitung (das heißt den aufgeweiteten Bereich) der Einfüllöffnung lässt sich die Düse einer Dosiereinrichtung besonders gut in der Einfüllöffnung einführen und dort so positionieren, dass die Düse die Einfüllöffnung optimal abdichtet. Damit wird vermieden, dass Vergussmasse auf das Blechpaket gelangt und sich dort ansammelt.

Ferner kann sich Vergussmasse, die aus der Entlüftungsöffnung auszutreten droht, zunächst in deren Aufweitung sammeln, bevor die Vergussmasse auf das Blechpaket gelangt. Dadurch verbleibt genügend Reaktionszeit zum Anhalten des Befüllvorgangs, womit ein Überfüllen des Blechpakets, das zum Ansammeln von Vergussmasse auf dem Blechpaket führen könnte, vermieden wird.

Zusammenfassend lässt sich mit der Aufweitung der Einfüllöffnung beziehungsweise der Entlüftungsöffnung das Vergießen der Magnete des Blechpakets mit Vergussmasse besonders gut ausführen beziehungsweise kontrollieren.

Unter dem äußeren Ende der Einfüllöffnung oder der Entlüftungsöffnung kann der an der Oberfläche des Blechpakets angeordnete Abschnitt der jeweiligen Öffnung verstanden werden. Neben der Einfüllöffnung und der Entlüftungsöffnung kann der Rotor weitere derartige Einfüllöffnungen und/oder Entlüftungsöffnungen aufweisen, durch die jeweils einer der Freiräume freigelegt ist.

Das Blechpaket kann aus den Elektroblechen gebildet worden sein, indem diese verschweißt, verklebt, stanzpaketiert oder auf eine andere Weise aneinander befestigt wurden. Insbesondere kann das Blechpaket eine zylindrische Form haben. Ferner kann jedes Elektroblech eine zentrale Öffnung besitzen, die im montierten Zustand eine axiale Bohrung des Blechpakets bilden, durch die eine Rotorwelle des Rotors führen kann. Die Achse der Rotorwelle beziehungsweise des Rotors entspricht der Axialachse des Blechpakets.

Die in einer Magnettasche eingesetzten Magnete sind vorzugsweise axial aneinandergereiht. Dadurch können bei der Montage des Rotors die Magnete einfach nacheinander in die Magnettasche eingesetzt beziehungsweise eingeschoben werden. Die axial aneinandergereihten Magnete werden als "Magnetstapel" bezeichnet. Der Rotor kann mehrere solcher Magnetstapel aufweisen, die jeweils in einer Magnettasche angeordnet sind. Alternativ zu einem Magnetstapel kann eine Magnettasche auch einen einzelnen Magneten aufnehmen.

Eine bevorzugte Weiterbildung der Erfindung sieht vor, dass an der Axialseite des Rotors eine erste Endplatte angeordnet ist, in der die Einfüllöffnung und die Entlüftungsöffnung vorgesehen sind. Daneben umfasst der Rotor eine an der gegenüberliegenden Axialseite des Blechpakets angeordnete zweite Endplatte. Die beiden Endplatten können dazu dienen, die Elektrobleche axial zusammenzupressen, sodass diese sich auch bei hohen Drehzahlen nicht voneinander lösen. Die Entlüftungsöffnung kann auf der Axialseite oder einer Radialseite der ersten Endplatte angeordnet sein.

Es wird weiterhin bevorzugt, dass eines der aufgeweiteten Enden (beziehungsweise eine der Aufweitungen) kegelstumpfförmig mit einem nach außen zunehmenden Durchmesser ausgebildet ist. Dadurch bildet die Aufweitung eine Art Trichter. Es ist auch möglich, dass sich sowohl die Einfüllöffnung als auch die Entlüftungsöffnung jeweils nach außen kegelstumpfförmig erweitern. Dabei kann es sich insbesondere um einen geraden Kegelstumpf handeln. Alternativ zu der Kegelstumpfform kann auch eine andere Form für die Aufweitung verwendet werden, zum Beispiel eine Zylinderform oder eine Halbkugelform.

Der Öffnungswinkel eines solchen Kegelstumpfes beziehungsweise eines entsprechenden Kegels kann beispielsweise 90° bis 150°, 110° bis 130°, 120°, 90°, mehr als 90° oder 19° betragen. Besonders bevorzugt beträgt der Öffnungswinkel 60°. Unter dem Öffnungswinkel kann das Doppelte eines Winkels verstanden werden, der von einer Mantellinie und der Kegelachse des Kegelstumpfes gebildet ist.

Weiterhin kann der erste Freiraum an einer Seitenfläche einer Magnettasche ausgebildet sein, wobei der zweite Freiraum an einer gegenüberliegenden Seitenfläche der Magnettasche ausgebildet ist. Damit lassen sich die zwischen den beiden Freiräumen angeordneten Magnete durch das Vergießen mit der Vergussmasse besonders gut befestigen.

Bei einer Ausführungsform der Erfindung sind der erste Freiraum und der zweite Freiraum zu einem durchgängigen Kanal verbunden. Daher kann in den ersten Freiraum eingefüllte Vergussmasse bis in den zweiten Freiraum gelangen, womit kein separates Befüllen des zweiten Freiraums nötig ist. Außerdem kann beim Einfüllen von Vergussmasse in den ersten Freiraum darin enthaltene Luft durch den Verbindungskanal und den zweiten Freiraum nach außen entweichen.

Weiterhin kann das Blechpaket aus mehreren Blechpaketsegmenten zusammengesetzt sein, wobei eines oder mehrere der Blechpaketsegmente gegenüber einem oder mehreren der anderen Blechpaketsegmente in Umfangsrichtung verdreht sein können. Auf diese Weise kann das Rotationsverhalten des Rotors verbessert sein.

Bei dem erfindungsgemäßen Rotor sind die Magnete vorzugsweise mit einer in die Freiräume eingebrachten Vergussmasse vergossen, die die Freiräume füllt. Normalerweise werden die Freiräume vollständig mit Vergussmasse gefüllt. Es ist jedoch auch möglich, die Freiräume nur teilweise mit Vergussmasse zu füllen. Als Vergussmasse kann unter anderem ein Epoxidharz, eine Mischung aus einem Epoxidharz und einem Härter, oder ein Klebstoff verwendet werden.

Daneben betrifft die Erfindung eine elektrische Maschine mit einem Rotor der beschriebenen Art. Neben dem Rotor kann die elektrische Maschine über einen Stator verfügen, gegenüber dem der Rotor drehbar ist.

Der Stator kann ein weiteres Blechpaket (Statorpaket) aufweisen, das aus gestapelten Elektroblechen gebildet wurde. Zusätzlich kann der Stator Wicklungen elektrischer Leiter besitzen, zum Beispiel als Spulenwicklungen oder Flachdrahtwicklungen. Ferner kann die Maschine mit einem Gehäuse ausgestattet sein, in dem der Rotor und der Stator aufgenommen sind, wobei die Rotorwelle aus dem Gehäuse ragen kann.

Weiterhin betrifft die Erfindung ein Fahrzeug mit einer derartigen elektrischen Maschine, die zum Antreiben des Fahrzeugs vorgesehen ist. Die Maschine kann insbesondere ein Rad oder eine Achse des Fahrzeugs antreiben.

Außerdem betrifft die Erfindung ein Verfahren zur Herstellung eines Rotors für eine elektrische Maschine, mit den folgenden Schritten:
- Bilden eines Blechpakets, in dem Magnettaschen angeordnet sind, aus gestapelten Elektroblechen,
- Einsetzen wenigstens eines der Magneten in jede der Magnettaschen, wodurch mehrere Freiräume gebildet werden, die jeweils von den in eine der Magnettaschen eingesetzten Magneten und dem Blechpaket begrenzt werden,
- Anordnen einer ersten Endplatte mit einer Einfüllöffnung, durch die ein erster der Freiräume freigelegt wird und einer Entlüftungsöffnung, durch die ein zweiter der Freiräume freigelegt wird, an einer Axialseite des Blechpakets, wobei das äußere Ende der Einfüllöffnung und/oder das äußere Ende der Entlüftungsöffnung aufgeweitet sind,
- Anordnen einer zweiten Endplatte an der gegenüberliegenden Axialseite des Blechpakets,
- Verspannen der beiden Endplatten miteinander unter Verwendung von Spannelementen, und
- Vergießen der in die Magnettaschen eingesetzten Magnete mit einer Vergussmasse, welche durch die Einfüllöffnung in das Blechpaket eingebracht wird.

Weiterhin betrifft die Erfindung ein anderes Verfahren zur Herstellung eines Rotors für eine elektrische Maschine, mit den folgenden Schritten:
- Bilden eines Blechpakets, in dem Magnettaschen angeordnet sind, aus gestapelten Elektroblechen,
- Einsetzen wenigstens eines der Magneten in jede der Magnettaschen, wodurch mehrere Freiräume gebildet werden, die jeweils von den in eine der Magnettaschen eingesetzten Magneten und dem Blechpaket begrenzt werden,
- Anordnen einer Vergussplatte mit einer Einfüllöffnung, durch die ein erster der Freiräume freigelegt wird und einer Entlüftungsöffnung, durch die ein zweiter der Freiräume freigelegt wird, an einer Axialseite des Blechpakets, wobei das äußere Ende der Einfüllöffnung und/oder das äußere Ende der Einfüllöffnung Entlüftungsöffnung aufgeweitet sind,
- Vergießen der in die Magnettaschen eingesetzten Magnete mit einer Vergussmasse, welche durch die Einfüllöffnung in das Blechpaket eingebracht wird, und
- Entfernen der Vergussplatte von dem Blechpaket.

Bei beiden erfindungsgemäßen Verfahren kann beim Vergießen eine Düse einer Dosiereinrichtung in die Einfüllöffnung eingesetzt werden, deren Form mit der Form der Einfüllöffnung korrespondiert. Dadurch wird die Einfüllöffnung optimal abgedichtet.

Vorzugsweise wird das Vergießen unter Überdruck vorgenommen, was die für das Einbringen der Vergussmasse benötigte Zeitdauer reduziert.

Bei einer Variante der erfindungsgemäßen Verfahren wird der Füllstand der Vergussmasse in der Entlüftungsöffnung automatisch überwacht. Beim Erreichen eines festgelegten Füllstands kann die Zufuhr der Vergussmasse gestoppt werden.

Der Füllstand kann zum Beispiel mit einem Füllstandsensor der Dosiereinrichtung überwacht werden. Mit dem Füllstandsensor lässt sich die Überwachung automatisieren. In Frage kommt unter anderem ein Füllstandsensor, der den Füllstand berührungslos erfasst, zum Beispiel ein optischer Füllstandsensor oder ein Ultraschall-Füllstandsensor.

Im Folgenden werden Ausführungsformen der Erfindung unter Bezugnahme auf die Figuren erläutert. Die Figuren sind schematische Darstellungen und zeigen:
- Fig. 1: eine Seitenansicht eines Rotors gemäß einer ersten Ausführungsform der Erfindung,
- Fig. 2: eine Schnittansicht eines Blechpakets des Rotors,
- Fig. 3: eine vergrößerte Schnittansicht eines Ausschnitts einer Endplatte des Rotors,
- Fig. 4: eine Schnittansicht eines Blechpakets eines Rotors gemäß einer zweiten Ausführungsform der Erfindung,
- Fig. 5: ein Fahrzeug mit einer elektrischen Maschine mit einem erfindungsgemäßen Rotor.

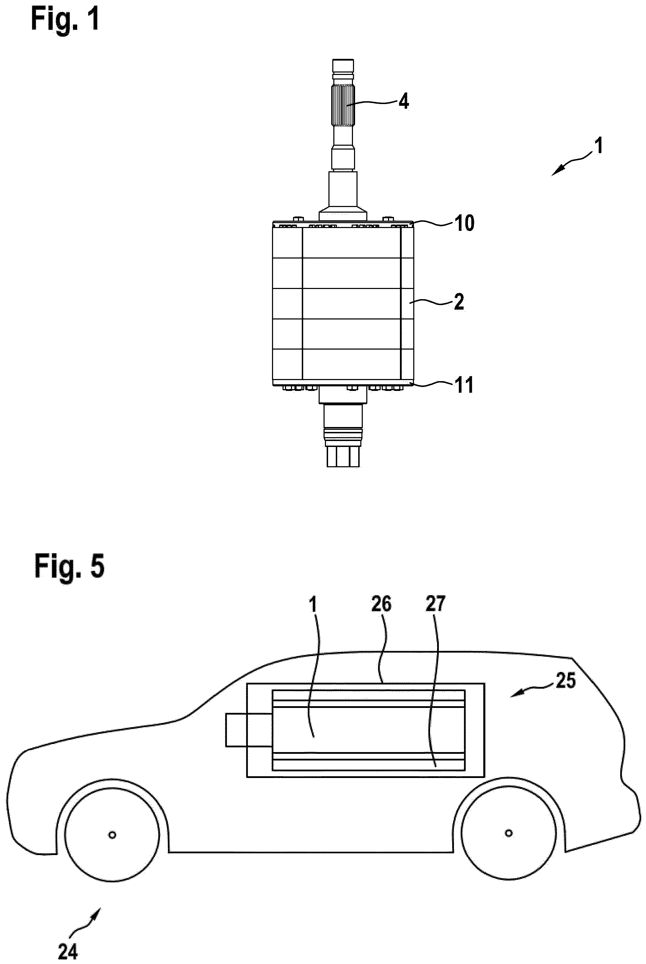

**Figur 1** zeigt einen Rotor 1 gemäß einer ersten Ausführungsform der Erfindung in einer Seitenansicht. Der Rotor 1 gehört zu einer elektrischen Maschine, die zum Antreiben eines Fahrzeugs eingesetzt wird.

Der Rotor 1 weist ein zylinderförmiges Blechpaket 2 auf, das eine Rotorwelle 4 des Rotors 1 umschließt. Das Blechpaket 2 ist aus in Axialrichtung gestapelten Elektroblechen zusammengesetzt, bei denen es sich um identisch ausgebildete Stanzteile handelt. Die Elektrobleche sind auf fünf Blechpaketsegmente aufgeteilt, wobei auch eine andere Anzahl von Blechpaketsegmenten oder ein unsegmentiertes Blechpaket verwendbar wären.

Entlang seines Umfanges sind mehrere Magnettaschen (nicht gezeigt) in dem Blechpaket 2 angeordnet, die sich jeweils von einer Axialseite des Blechpaktes 2 bis zu seiner gegenüberliegenden Axialseite erstrecken. In einer Magnettasche sind axial mehrere quaderförmige Magnete aneinandergereiht, die einen Magnetstapel bilden. In dem Blechpaket sind zweiunddreißig solche Magnetstapel untergebracht, wobei auch eine andere Anzahl Magnetstapel verwendbar ist.

Neben jedem Magnetstapel befinden sich zwei Freiräume die jeweils von dem Magnetstapel und dem Blechpaket 2 begrenzt sind. Mit anderen Worten weist jede Magnettasche einen an einer Seitenfläche der Magnettasche ausgebildeten ersten Freiraum und einen an einer gegenüberliegenden Seitenfläche der Magnettasche ausgebildeten zweiten Freiraum auf, die durch einen Magnetstapel voneinander getrennt sind. Der erste Freiraum und der zweite Freiraum verlaufen parallel zueinander von einer Axialseite bis zur gegenüberliegenden Axialseite des Blechpakets 2.

Ferner verfügt der Rotor 1 über eine erste Endplatte 10 und eine zweite Endplatte 11, die an gegenüberliegenden Axialseiten des Blechpakets 2 angeordnet und unter Verwendung von Spannelementen in Form von Schrauben miteinander verbunden sind. Dadurch wird das Blechpaket 2 permanent mit einer Druckkraft beziehungsweise Vorspannkraft beaufschlagt. Damit wird vermieden, dass sich die Elektrobleche des Blechpakets 2 voneinander lösen, insbesondere bei hohen Drehzahlen des Rotors 1.

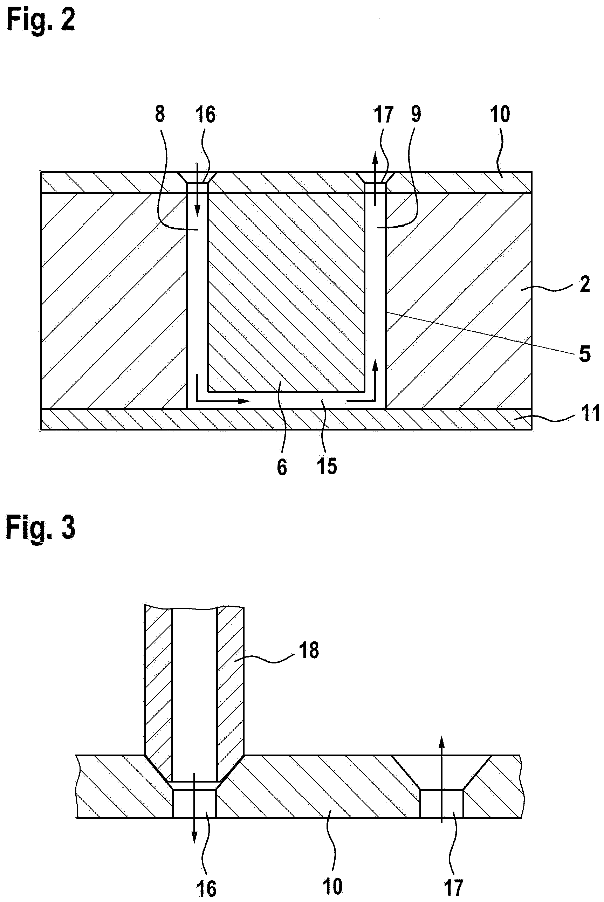

**Figur 2** zeigt eine Schnittansicht des Blechpakets 2 mit der ersten Endplatte 10 und der zweiten Endplatte 11. Ferner ist beispielhaft eine der Magnettaschen 5 mit einem darin angeordneten Magnetstapel 6 dargestellt. Anstelle des Magnetstapels 6 kann aber auch ein einzelner Magnet vorgesehen sein.

In der Magnettasche 5 befinden sich außerdem ein erster Freiraum 8 und ein zweiter Freiraum 9, die jeweils von dem Magnetstapel 6 und dem Blechpaket 2 begrenzt sind. Der erste Freiraum 8 ist an einer Seitenfläche der Magnettasche 5 ausgebildet und der zweite Freiraum 9 ist an einer gegenüberliegenden Seitenfläche der Magnettasche 5 ausgebildet.

Der erste Freiraum 8 ist durch eine Einfüllöffnung 16 freigelegt, welche die erste Endplatte 10 axial durchdringt. Der zweite Freiraum 9 ist durch eine Entlüftungsöffnung 17 freigelegt, welche ebenfalls die erste Endplatte 10 axial durchdringt. Alternativ dazu könnte eine Entlüftungsöffnung radial aus der ersten Endplatte austreten.

Die Einfüllöffnung 16 und die Entlüftungsöffnung 17 sind jeweils an ihrem äußeren Ende aufgeweitet. Jede der beiden Aufweitungen ist kegelstumpfförmig ausgebildet, mit einem zum äußeren Ende der jeweiligen Öffnung zunehmenden Durchmesser.

Ferner sind der erste Freiraum 8 und der zweite Freiraum 9 durch einen Verbindungskanal 15 zu einem durchgängigen Kanal miteinander verbunden, welcher von der Einfüllöffnung 16 bis zu der Entlüftungsöffnung 17 verläuft. Der Verbindungskanal 15 verläuft insbesondere zwischen dem Magnetstapel 6 und der zweiten Endplatte 11. Hierzu kann der Magnetstapel 6 in geeigneter Weise an der zweiten Endplatte 11 abgestützt sein.

**Fig. 3** zeigt eine Schnittansicht eines vergrößerten Ausschnitts der ersten Endplatte 10 mit der Einfüllöffnung 16 und der Entlüftungsöffnung 17. Dort ist zu erkennen, dass sich die Aufweitung der Einfüllöffnung 16 und die Aufweitung der Entlüftungsöffnung 17 jeweils über etwa die Hälfte der Dicke der ersten Endplatte 10 erstrecken.

Bei einem erfindungsgemäßen Verfahren zur Herstellung des Rotors 1 werden folgende Schritte ausgeführt:
Bei einem ersten Verfahrensschritt wird das Blechpaket 2, in dem die Magnettaschen 5 angeordnet sind, aus gestapelten Elektroblechen zusammengesetzt.

Bei einem zweiten Verfahrensschritt werden in jede Magnettasche 5 mehrere Magnete eingesetzt. Insbesondere werden die Magnete axial aneinandergereiht, so dass sie einen Magnetstapel 6 bilden. Neben jedem Magnetstapel 6 verbleiben zwei Freiräume 8, 9, die jeweils von dem Magnetstapel 6 und dem Blechpaket 2 begrenzt sind.

Bei einem dritten Verfahrensschritt wird die erste Endplatte 10 an einer Axialseite des Blechpakets 2 angeordnet, so dass der erste Freiraum 8 durch die Einfüllöffnung 16 freigelegt wird und der zweite Freiraum 9 durch die Entlüftungsöffnung 17 freigelegt wird.

Bei einem vierten Verfahrensschritt wird die zweite Endplatte 11 an der gegenüberliegenden Axialseite des Blechpakets 2 angeordnet.

Bei einem fünften Verfahrensschritt werden die beiden Endplatten 10, 11 mit den Spannelementen verspannt. Der auf diese Weise komplettierte Rotor 1 wird senkrecht ausgerichtet, mit der ersten Endplatte 10 nach oben (vergleiche Figur 1).

Bei einem sechsten Verfahrensschritt werden die Magnete mit einer Vergussmasse vergossen, so dass die Freiräume 8, 9 mit der Vergussmasse gefüllt werden.

Dazu wird in die Einfüllöffnung 16 der ersten Endplatte 10 eine Düse 18 einer Dosiereinrichtung eingesetzt (vergleiche Figur 3). Insbesondere wird die Düse 18 auf die Innenwand der kegelstumpfförmigen Aufweitung der Einfüllöffnung 16 aufgesetzt.

Die Form der Düse 18 korrespondiert mit der Form der Einfüllöffnung 16, indem das vordere Ende der Düse 18 ebenfalls kegelstumpfförmig ausgebildet ist: Ferner entspricht der Öffnungswinkel des Kegelstumpfes der Düse dem Öffnungswinkel des Kegelstumpfes der Einfüllöffnung 16. Dadurch dichtet die Düse 18 die Einfüllöffnung 16 optimal ab.

Ferner wird die Vergussmasse mittels der Dosiereinrichtung mit Überdruck durch die Düse 18 in den ersten Freiraum 8 gepresst, so dass die Vergussmasse durch den ersten Freiraum 8 und den Verbindungskanal 15 in den zweiten Freiraum 9 strömt.

Im Einzelnen strömt die Vergussmasse zunächst durch den ersten Freiraum 8 axial nach unten bis zur zweiten Endplatte 11. Dann strömt die Vergussmasse horizontal durch den Verbindungskanal 15 zu dem zweiten Freiraum 9. Anschließend steigt die Vergussmasse durch den zweiten Freiraum 9 axial nach oben bis zur ersten Endplatte 10. Dabei kann in der Magnettasche 5 vorhandene Luft durch die Entlüftungsöffnung 17 entweichen und mit der Vergussmasse ersetzt werden. Die Strömungsrichtung der Vergussmasse beziehungsweise Luft ist in den Figuren 2 und 3 jeweils mit Pfeilen symbolisiert.

Gelangt die in dem zweiten Freiraum 9 aufgestiegene Vergussmasse bis die kegelstumpfförmige Aufweitung der Entlüftungsöffnung 17, steigt der Füllstand der Vergussmasse besonders langsam weiter an. Dadurch bleibt genügend Reaktionszeit, den Befüllvorgang abzubrechen, so dass ein Überfüllen des Kanals mit Vergussmasse vermieden wird. Außerdem lässt sich der Füllstand in der Aufweitung besonders gut überwachen, zum Beispiel mit einem optischen Füllstandsensor.

Die Aufweitung der Entlüftungsöffnung 17 dient auch als Reservoir für die Vergussmasse. Falls nach dem Einfüllen der Vergussmasse Luftblasen in dem zweiten Freiraum 9 aufsteigen, kann die in der Aufweitung der Entlüftungsöffnung 17 vorhandene zusätzliche Vergussmasse das durch die aufgestiegenen Luftblasen entfallene Volumen ersetzen.

Nach dem Vergießen wird die Vergussmasse ausgehärtet. Außerdem kann die Rotorwelle 4 durch eine axial verlaufende zentrale Durchgangsöffnung des Blechpakets 2 (und entsprechende Öffnungen der Endplatten 10, 11) geführt werden, so dass das Blechpaket 2 die Rotorwelle 4 umschließt beziehungsweise daran befestigt wird.

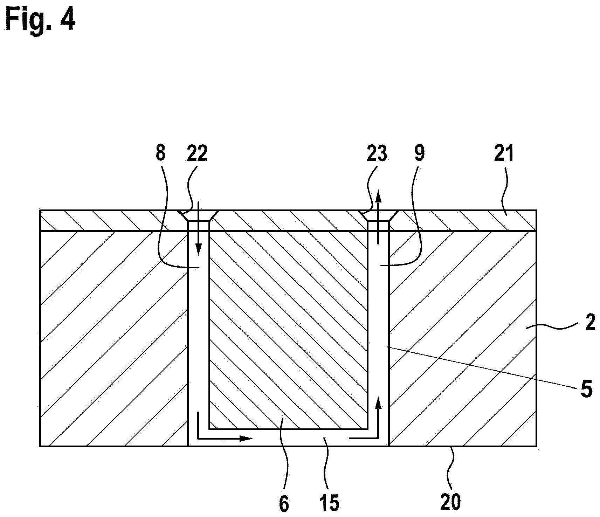

**Figur 4** zeigt eine Schnittansicht eines Blechpakets 2 eines Rotors gemäß einer zweiten Ausführungsform der Erfindung. Der Rotor entspricht dem in Figur 1 gezeigten Rotor 1, weist aber im Unterschied zu diesem keine Endplatten und Spannelemente auf.

Unter anderem ist eine der Magnettaschen 5 des Rotors dargestellt, mit einem darin angeordneten Magnetstapel 6. Daneben sind ein erster Freiraum 8 und ein zweiter Freiraum 9 in der Magnettasche 5 angeordnet, die jeweils von dem Magnetstapel 6 und dem Blechpaket 2 begrenzt sind. Der erste Freiraum 8 ist an einer Seitenfläche der Magnettasche 5 ausgebildet und der zweite Freiraum 9 ist an einer gegenüberliegenden Seitenfläche der Magnettasche 5 ausgebildet.

Außerdem ist eine auf das Blechpaket 2 aufgelegte Vergussplatte 21 dargestellt. Der erste Freiraum 8 ist durch eine Einfüllöffnung 22 freigelegt, welche die Vergussplatte 21 axial durchdringt. Der zweite Freiraum 9 ist durch eine Entlüftungsöffnung 23 freigelegt, welche ebenfalls die Vergussplatte 21 axial durchdringt.

Die Einfüllöffnung 22 und die Entlüftungsöffnung 23 sind jeweils an ihrem äußeren Ende aufgeweitet. Jede der Aufweitungen ist kegelstumpfförmig ausgebildet, mit einem zum äußeren Ende der jeweiligen Öffnung zunehmenden Durchmesser.

Ferner sind der erste Freiraum 8 und der zweite Freiraum 9 durch einen Verbindungskanal 15 zu einem durchgängigen Kanal miteinander verbunden. Der Kanal verläuft von der Einfüllöffnung 22 bis zu der Entlüftungsöffnung 23. Insbesondere verläuft der Verbindungskanal 15 zwischen dem Magnetstapel 6 und einem Endblech des Blechpakets 2. Dazu kann der Verbindungskanal 15 mittels einer geeigneten Wölbung des Endbleches 20 realisiert sein.

Bei einem erfindungsgemäßen Verfahren zur Herstellung des Rotors werden folgende Schritte ausgeführt:
Bei einem ersten Verfahrensschritt wird das Blechpaket 2, in dem die Magnettaschen 5 angeordnet sind, aus gestapelten Elektroblechen zusammengesetzt.

Bei einem zweiten Verfahrensschritt werden in jede Magnettasche 5 mehrere Magnete eingesetzt. Insbesondere werden die Magnete axial aneinandergereiht, so dass sie einen Magnetstapel 6 bilden. Neben jedem Magnetstapel 6 verbleiben zwei Freiräume 8, 9, die jeweils von dem Magnetstapel 6 und dem Blechpaket 2 begrenzt sind. Der auf diese Weise komplettierte Rotor wird senkrecht ausgerichtet, mit einer Axialseite nach oben.

Bei einem dritten Verfahrensschritt wird die Vergussplatte auf das Blechpaket 2 aufgelegt, so dass der erste Freiraum 8 durch die Einfüllöffnung 22 freigelegt wird und der zweite Freiraum 9 durch die Entlüftungsöffnung 23 freigelegt wird.

Bei einem vierten Verfahrensschritt werden die Magnete mit einer Vergussmasse vergossen, so dass die Freiräume 8, 9 mit der Vergussmasse gefüllt werden. Dabei wird wie bei dem Rotor 1 gemäß der ersten Ausführungsform der Erfindung vorgegangen.

Bei einem fünften Verfahrensschritt wird die Vergussplatte von dem Blechpaket 2 entfernt.

Nach dem Vergießen wird die Vergussmasse ausgehärtet. Außerdem kann die Rotorwelle 4 durch eine axial verlaufende zentrale Durchgangsöffnung des Blechpakets 2 geführt werden, so dass das Blechpaket 2 die Rotorwelle 4 umschließt beziehungsweise daran befestigt wird.

**Figur 5** zeigt ein Fahrzeug 24 mit einer elektrischen Maschine 25, die zum Antreiben des Fahrzeugs 24 dient. Die Maschine 25 weist ein Gehäuse 26 auf, in dem der erfindungsgemäße Rotor 1 und ein Stator 27 aufgenommen sind, der den Rotor 1 umgibt.

### Bezugszeichenliste

- 1: Rotor
- 2: Blechpaket
- 4: Rotorwelle
- 5: Magnettasche
- 6: Magnetstapel
- 8: Freiraum
- 9: Freiraum
- 10: Endplatte
- 11: Endplatte
- 15: Verbindungskanal
- 16: Einfüllöffnung
- 17: Entlüftungsöffnung
- 18: Düse
- 20: Endblech
- 21: Vergussplatte
- 22: Einfüllöffnung
- 23: Entlüftungsöffnung
- 24: Fahrzeug
- 25: elektrische Maschine
- 26: Gehäuse
- 27: Stator

## Patentansprüche

1. Rotor (1) für eine elektrische Maschine (25), umfassend:
- ein aus gestapelten Elektroblechen gebildetes Blechpaket (2) mit darin angeordneten Magnettaschen (5),
- mehrere Magnete, von denen in jede der Magnettaschen (5) mindestens einer eingesetzt ist,
- mehrere Freiräume (8, 9), die jeweils von den in eine der Magnettaschen (5) eingesetzten Magneten und dem Blechpaket (2) begrenzt sind,
- eine an einer Axialseite des Blechpakets (2) angeordnete Einfüllöffnung (16), durch die ein erster der Freiräume (8) freigelegt ist, und eine an der Axialseite angeordnete Entlüftungsöffnung (17), durch die ein zweiter der Freiräume (9) freigelegt ist, wobei das äußere Ende der Einfüllöffnung (16) und/oder das äußere Ende der Entlüftungsöffnung (17) aufgeweitet sind.

2. Rotor (1) nach Anspruch 1 mit einer an der Axialseite angeordneten ersten Endplatte (10), in der die Einfüllöffnung (16) und die Entlüftungsöffnung (17) angeordnet sind, und einer an der gegenüberliegenden Axialseite des Blechpakets (2) angeordneten zweiten Endplatte (11).

3. Rotor (1) nach Anspruch 1 oder 2, wobei eines der aufgeweiteten Enden kegelstumpfförmig mit einem nach außen zunehmenden Durchmesser ausgebildet ist.

4. Rotor (1) nach Anspruch 3, wobei der Öffnungswinkel des Kegelstumpfs 90° bis 150°, 110° bis 130°, 120°, 90°, 19°, mehr als 90° oder besonders bevorzugt 60° beträgt.

5. Rotor (1) nach einem der vorangehenden Ansprüche, wobei der erste Freiraum (8) mit dem zweiten Freiraum (9) zu einem durchgängigen Kanal verbunden ist.

6. Rotor (1) nach einem der vorangehenden Ansprüche, wobei der erste Freiraum (8) an einer Seitenfläche einer der Magnettaschen (5) angeordnet ist und der zweite Freiraum (9) an einer gegenüberliegenden Seitenfläche der Magnettasche (5) angeordnet ist.

7. Rotor (1) nach einem der vorangehenden Ansprüche, wobei das Blechpaket (2) mehrere axial aneinandergereihte Blechpaketsegmente aufweist und eines der Blechpaketsegmente gegenüber einem anderen der Blechpaketsegmente in Umfangsrichtung verdreht ist.

8. Rotor (1) nach einem der vorangehenden Ansprüche, wobei die Magnete mit einer in die Freiräume (8, 9) eingebrachten Vergussmasse vergossen sind.

9. Elektrische Maschine (25) mit einem Rotor (1) nach einem der vorangehenden Ansprüche.

10. Fahrzeug (24) mit einer elektrischen Maschine (25) nach Anspruch 9, die zum Antreiben des Fahrzeugs (24) vorgesehen ist.

11. Verfahren zur Herstellung eines Rotors (1) für eine elektrische Maschine (25), mit den folgenden Schritten:
- Bilden eines Blechpakets (2), in dem Magnettaschen (3) angeordnet sind, aus gestapelten Elektroblechen,
- Einsetzen wenigstens eines der Magnete in jede der Magnettaschen (5), wodurch mehrere Freiräume (8, 9) gebildet werden, die jeweils von den in eine der Magnettaschen (5) eingesetzten Magneten und dem Blechpaket (2) begrenzt werden,
- Anordnen einer ersten Endplatte (10) mit einer Einfüllöffnung (16), durch die ein erster der Freiräume (8) freigelegt ist und einer Entlüftungsöffnung (17), durch die ein zweiter der Freiräume (9) freigelegt ist, an einer Axialseite des Blechpakets (2), wobei das äußere Ende der Einfüllöffnung (16) und/oder das äußere Ende der Entlüftungsöffnung (17) aufgeweitet sind,
- Anordnen einer zweiten Endplatte (11) an der gegenüberliegenden Axialseite des Blechpakets (2),
- Verspannen der beiden Endplatten (10, 11) miteinander unter Verwendung von Spannelementen, und
- Vergießen der in die Magnettaschen (5) eingesetzten Magnete mit einer Vergussmasse, welche durch die Einfüllöffnung (16) in das Blechpaket (2) eingebracht wird.

12. Verfahren zur Herstellung eines Rotors für eine elektrische Maschine (25), mit den folgenden Schritten:
- Bilden eines Blechpakets (2), in dem Magnettaschen (5) angeordnet sind, aus gestapelten Elektroblechen,
- Einsetzen wenigstens eines der Magnete in jede der Magnettaschen (5), wodurch mehrere Freiräume (8, 9) gebildet werden, die jeweils von den in eine der Magnettaschen (5) eingesetzten Magneten und dem Blechpaket (2) begrenzt werden,
- Anordnen einer Vergussplatte (21) mit einer Einfüllöffnung (22), durch die ein erster der Freiräume (8) freigelegt wird und einer Entlüftungsöffnung (23), durch die ein zweiter der Freiräume (9) freigelegt wird, an einer Axialseite des Blechpakets (2), wobei das äußere Ende der Einfüllöffnung (22) und/oder das äußere Ende der Entlüftungsöffnung (23) aufgeweitet sind,
- Vergießen der in die Magnettaschen (5) eingesetzten Magnete mit einer Vergussmasse, welche durch die Einfüllöffnung (22) in das Blechpaket (2) eingebracht wird, und
- Entfernen der Vergussplatte (21) von dem Blechpaket (2).

13. Verfahren nach Anspruch 11 oder 12, wobei beim Vergießen eine Düse (18) einer Dosiereinrichtung in die Einfüllöffnung (16, 22) eingesetzt wird, deren Form mit der Form der Einfüllöffnung (16, 22) korrespondiert.

14. Verfahren nach einem der Ansprüche 11 bis 13, wobei das Vergießen unter Überdruck vorgenommen wird.

15. Verfahren nach einem der Ansprüche 11 bis 14, wobei beim Vergießen der Füllstand der Vergussmasse in der Entlüftungsöffnung (17, 23) automatisch überwacht wird.
